# EUROPEAN PATENT SPECIFICATION

(11) **EP 3 916 346 B1**
(45) Date of publication and mention of the grant of the patent: **18.01.2023**
(21) Application number: 20211067.2
(22) Date of filing: 01.12.2020
(51) Int. Cl.: G01B 11/24, A43B 7/28

(54) **METHOD FOR THE PRODUCTION OF CUSTOMISED ORTHOTICS**
VERFAHREN ZUR HERSTELLUNG VON MASSGESCHNEIDERTEN EINLAGEN
PROCÉDÉ DE PRODUCTION D'ORTHÈSES PERSONNALISÉES

(30) Priority: 27.05.2020 IT 202000012568
(43) Date of publication of application: 01.12.2021
(73) Proprietor: Medere Srl, 00118 Roma (RM) (IT)
(72) Inventor: FERRANTE, Raffaele, 00118 Roma (RM) (IT); MANNISI, Marco, 00118 Roma (RM) (IT); BIANCHI, Daniele, 00118 Roma (RM) (IT)
(74) Representative: Santi, Filippo

(56) References cited:
- EP-A1- 2 501 251
- WO-A1-2019/088232
- WO-A1-2020/044083
- WO-A2-2008/070537
- KR-A- 20120 039 252
- US-A1- 2016 110 479
- CHUNG-NENG HUANG ET AL: "Computer-Aided Design and Manufacturing of Customized Insoles", IEEE COMPUTER GRAPHICS AND APPLICATIONS, IEEE SERVICE CENTER, NEW YORK, NY, US, vol. 31, no. 2, 1 March 2011 (2011-03-01), pages 74-79, XP011348512, ISSN: 0272-1716, DOI: 10.1109/MCG.2011.19
- YU J ET AL: "Development of a finite element model of female foot for high-heeled shoe design", CLINICAL BIOMECHANICS, BUTTERWORTH SCIENTIFIC LTD, GUILDFORD, GB, vol. 23, 1 January 2008 (2008-01-01), pages S31-S38, XP024526515, ISSN: 0268-0033, DOI: 10.1016/J.CLINBIOMECH.2007.09.005 [retrieved on 2007-10-25]

## Description

This invention relates to a method for the production of customised orthotics.

In particular, the invention relates to a method for the production of orthotics in which clinical and biometric data can be integrated.

In the following description, the term "orthotic" may be replaced by the expression "orthotic insole" or "insole".

### BACKGROUND ART

The use of orthopaedic orthotics, footwear and aids is one of the most widespread solutions in the rehabilitation and pain management sector. Many musculoskeletal diseases are in fact associated with postural problems in the lower limbs. Orthotics are therefore an optimum solution for the postural adaptation of the foot with the aim of making structural changes extending to the rachis and cervical area.

In recent years, new 3D printing and body scanning technologies are making significant changes in the field of medicine and the production of orthopaedic aids. The invention refers to the above-mentioned technological innovations applied in the field of the production of orthotic insoles.

According to the prior art, there are several patents concerning 3D printing applied to the production of orthopaedic aids. In particular, some patents describe a method comprising all the steps for the production of a customised orthotic insole, integrating the anatomical and clinical data of a patient. For example, the US patent application No. US 2015 021 0015 A1 (inventors: Kegan Leann Schouwenburg et al.) describes a method for producing orthopaedic aids, which integrates data taken directly from the user. However, this process is difficult to standardise.

Other prior art documents describing similar methods are US 2004 133 431 A1, US 2016 110 479 A1, US 2016 101 571 A1, and US 2017 190 121 A1.

In particular, patent document US 2016 110 479 A1 describes a semi-automatic method for the production of an orthotic insole, in which a digital model of the insole is discretized, for the creation of a grid-type model which defines the upper surface of the orthotic insole. However, this method has high computational costs. Moreover, since patent document US 2016 110 479 A1 uses this grid-type discretization, the final model of the orthotic insole may be affected by errors such as, for example, an incorrect modelling due to a small number of elements. In fact, this method is highly dependent on the choice of the dimensions and proportions of the rectangular elements, which must be sufficiently small to guarantee an accurate model which is able to meet the needs of the individual foot.

Moreover, patent document US 2016 110 479 A1 comprises a final phase wherein the reconstructed orthotic insole can be modified on the basis of any medical prescriptions or specific needs of the patient. As these modifications occur after the creation of the orthosis itself, the method described in patent document US 2016 110 479 has long modelling times and does not allow an active control over the final result of the orthotic insole during the modelling step, nor does it ensure the effectiveness of the modification made. In fact, making changes at a later date could lead to a modification of the structure and surfaces of the orthotic which were not foreseen at the initial step. Finally, this method offers limited freedom of choice on the part of the technician responsible for controlling the final shape.

In light of the above, the method according to the invention aims to define a standard dataset for the production of customised orthotics.

The aim of the invention is therefore to define a standardised method for the production of corrective and/or sports orthotics which is as independent as possible from the podiatry problem which is to be solved.

A further aim of the invention is to improve the quality of the orthotic insole produced, in terms of patient comfort, compared to prior art devices.

Furthermore, the aim of the invention is to provide an automatic or semi-automatic method which is easy to implement, robust and reliable and with low computational costs.

Moreover, an aim of the invention is to provide a method which can be applied to the production of both corrective and sports insole orthotics.

Finally, an aim of the invention is to allow the production of insole orthotics at a low cost, when compared to the prior art technique.

These aims and further advantages are obtained by means of the method according to the invention, comprising a CAD design method for a corrective and/or sports orthotic insole which defines each modelling instruction starting from a previously defined standard dataset creating a unique orthopaedic or sports aid.

### SUMMARY OF THE INVENTION

The method according to the invention aims to produce customised corrective and/or sports orthotic insoles as follows:
- an innovative protocol for the acquisition and definition of image and/or video datasets necessary for the modelling of customised insole orthotics;
- an innovative method of CAD design and modelling for corrective and/or sports orthotic insoles.

In detail, the method is aimed at the production of orthotic insoles and provides, as a first step, a protocol for the acquisition of the image and/or video datasets through the use of a generic electronic device equipped with a camera (for example, smartphone, tablet). The protocol will guide the positioning of the acquisition device and parts of the body with the aim of acquiring optimised photographic images and videos for the production of the orthotic insoles. The protocol may also provide for the use of particular clothing (for example socks, stockings, bands) which facilitate the recognition of specific anatomical characteristics of the foot. The videos and images collected allow the three-dimensional CAD reconstruction of the foot. The reconstruction can be performed using different technologies such as, for example, photogrammetry and/or mesh morphing. Subsequently, a method of modelling according to the invention comprises the definition of fundamental lines and points starting from the geometric information of the reconstructed foot and the photographic images acquired, for modelling a digital model of an orthotic, also called a virtual orthotic. Optionally, the modelling method can integrate clinical data such as, for example, baropodometric data, force distribution, centre of mass position, MRI, CT, gait analysis. The integration of such clinical data may comprise the use of artificial intelligence algorithms. Finally, the digital model of the orthotic can be produced using modern 3D printing technology. The production method developed may comprise the modification of one or more manufacturing parameters (for example, material, material shore hardness rating, infill shape, infill thickness) in specific regions.

The object of the invention is therefore a method for the production of customised corrective and/or sports orthotic insoles as defined in claim 1 as well as a system configured for executing said method as defined in claim 12, a computer program comprising instructions for executing said method as defined in claim 14 and a data carrier signal that carries the instructions of said program as defined in claim 15.

The method may also comprise the characteristics defined in dependent Claims 2 to 11.

### DESCRIPTION OF THE INVENTION

The invention is now described, by way of example, with reference to the accompanying drawings, in which:
Figure 1 shows a perspective view of a video acquisition step carried out following the instructions of an acquisition protocol of a method according to the invention;
Figure 2 shows a side view of a foot of a user placed on a sheet F4 for the acquisition of a photo F1 following the instructions of an acquisition protocol of a method according to the invention;
Figure 3A shows a side view of the feet of a patient positioned for the acquisition of a photograph F3 following the instructions of an acquisition protocol of a method according to the invention;
Figure 3B shows a rear view of the feet of Figure 3A;
Figure 4 shows a front perspective view of the feet of a patient positioned for the acquisition of a photograph F5 following the instructions of an acquisition protocol of a method according to the invention;
Figure 5 shows a rear view of the feet of a user positioned for the acquisition of a photograph F6 following the instructions of an acquisition protocol of a method according to the invention;
Figure 6 shows a lower perspective view of a reconstructed model of a foot, on which four fundamental points have been identified, and of an initial digital model of orthotic insoles to be modelled, aligned below the foot, following the steps of a method according to the invention;
Figure 7 shows an upper view of a digital model of an orthotic insole during a modelling step of a method according to the invention, wherein a plurality of lines L1, L2, L3 and CM are defined on said digital model of an orthotic insole;
Figure 8 shows an upper view of the digital model of an orthotic insole of Figure 7 in a further modelling step of a method according to the invention, wherein a plurality of lines C1-C7 are defined on the said digital model of an orthotic insole;
Figure 9 shows a perspective view of the digital model of an orthotic insole of Figure 8, in a further modelling step of a method according to the invention, wherein a plurality of points P1-P7 are defined on a curve C4 of said digital model of the orthotic insole;
Figure 10 shows a perspective view of the digital model of an orthotic insole of Figure 9 and a projection of its outer boundary on the horizontal plane z=0, which contains the lower surface of the insole;
Figure 11 shows a perspective view of a digital model of an orthotic insole obtained by means of a method according to the invention;
Figure 12 shows a perspective view from above of a digital model of an orthotic insole obtained by a means of method according to the invention, wherein some areas which can be modified to personalise the therapeutic, comfort and mechanical response effects of said orthotic insole are highlighted; and
Figure 13 shows an example of an orthotic insole produced by means of a method according to the invention using 3D printing.

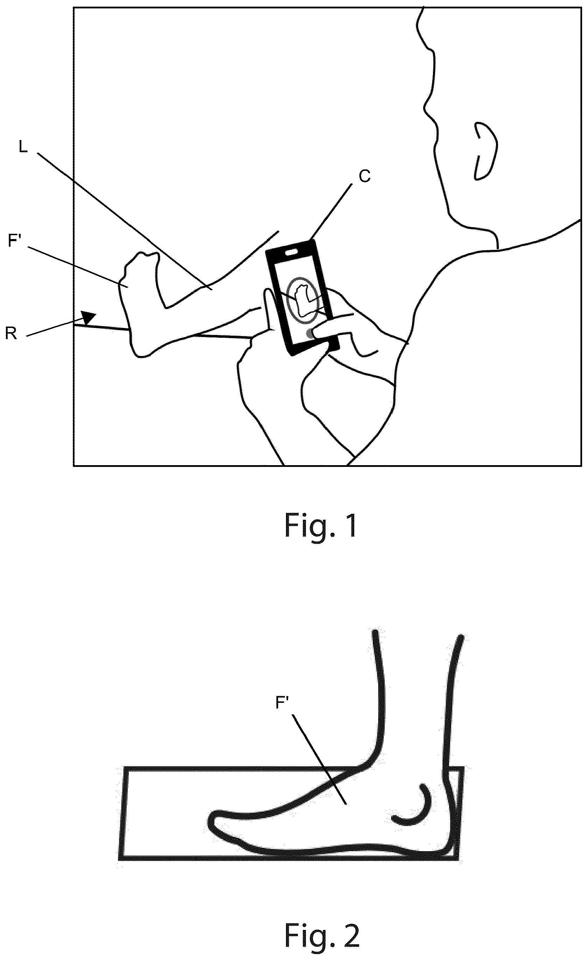

A description is given below, with particular reference to Figures 1 to 13, of a method according to the invention for the production of an orthotic insole 1, in particular a customised corrective and/or sports orthotic insole 1.

Specifically, a method according to the invention comprises:
- an acquisition step, wherein datasets relative to the feet F'; F" of a user are acquired by means of an acquisition device C (for example, by means of image and/or video acquisition using an acquisition device such as a smartphone or tablet), for the creation of photographic datasets, following the instructions of an acquisition protocol;
- a reconstruction phase or a further acquisition step, wherein the geometry of the foot F' or F" of the user is reconstructed or digitally acquired, for example starting from the acquired datasets; and
- a phase of modelling a corrective and/or sports type orthotic insole 1, wherein a digital model 100 of the orthotic insole 1 is modelled by CAD modelling starting from the geometry of the foot F' or F" of the user.

The proposed method allows, advantageously, a digital model 100 to be obtained which is accurate compared to prior art models, being able to be made on the basis of the reconstructed geometry of the foot F'; F", obtained through digital acquisitions.

Moreover, as better illustrated below, the modelling phase can use points and lines selected on the basis of anatomical reference points and construction lines, which divide the plantar area of the foot F'; F" into areas of high medical importance, also called anatomical areas of interest.

In this way, it is possible to optimise the model of the final orthotic insole 1 both in terms of the corrective effect for the user and taking into account the characteristics of the user in specific anatomical areas which are particularly sensitive, such as the plantar fascia, the metatarsal contact area and the rear-foot area.

The method according to the invention may also include a final step of production of the modelled orthotic insole 1.

Moreover, the method according to the invention can be performed completely locally, for example via a mobile device app comprising a video camera, in particular a smartphone or tablet. In this case, the smartphone or tablet can also be configured to send the final model to a 3D printer.

Alternatively, only the acquisition step can be performed by means of the acquisition device, which can be configured to acquire said datasets of the feet F'; F" and send them to a remote server control unit, configured to perform said modelling step. For example, an app on a mobile device can be configured to perform the acquisition step, allowing the user to check the acquired datasets and have them sent to said external server using the appropriate button. In particular, this external server can be the external server of an e-commerce site which allows footwear to be purchased comprising customised orthotic insoles.

With regard to the acquisition step shown in the example in Figure 1, the acquisition protocol may comprise the acquisition of a video per foot F', F" of the user, by means of a special acquisition device C. The acquired videos can in fact form a fundamental part of the initial dataset for the subsequent modelling and production of the orthotic insole 1, as illustrated below.

The acquisition protocol may also require that the foot F', F" and the acquisition device C are arranged in specific positions, for example in such a way as to comply with instructions I1 to I10 described below.

Moreover, the acquisition protocol can comprise the acquisition of six F1-F6 photographic images of the feet F'; F" in total. More in detail, these photographic images F1-F6 can be acquired by following the instructions described below.

Finally, the acquisition protocol may comprise the use of special clothing, such as socks, stockings, bands or meshes (not shown).

In detail, the acquisition protocol shown in Figures 1 - 5 comprises the acquisition of a total of 2 videos and 6 images.

With regard to the videos, one for each foot, the acquisition protocol can comprise a series of instructions designed to optimise the next step of digital reconstruction of the geometry of the foot.

The instructions I1-I10 for the acquisition of the videos, discussing their advantages, are given below. The instructions I1-I10 are:
- I1: letting the user stretch one leg L, resting it on a support R, in such a way that the leg L is parallel to the ground (as shown in Figure 1);
- I2: making the foot F' of the user protrude from the support R, in such a way that said foot F' is suspended from the ankle onwards (as shown in Figure 1);
- I3: keeping the foot F' of the user with the sagittal plane and the plantar plane perpendicular to the longitudinal axis of the leg (as shown in Figure 1);
- I4: letting the user extend the toes of the foot F' in an active and maximum manner (as shown in Figure 1);
- I5: acquiring a video of the foot F' by means of said acquisition device C (for example, a smartphone or tablet), in such a way that the foot always remains within a predefined overlapping, or overlay, area of predefined dimensions and position (as shown in Figure 1);
- I6: keeping the lens of the acquisition device one metre from the foot during the acquisition (as shown in Figure 1);
- I7: avoiding placing reflective surfaces (such as, for example, mirrors) in the acquisition space and exposure to direct light sources;
- I8: positioning the lens of the acquisition device at the same height as the foot above the ground;
- I9: acquiring the video by rotating around the foot between 200° and 300°;
- I10: maintaining a constant speed of movement during the acquisition of about 7.5 deg/s.

For this reason, by combining the information in the instructions I9 and I10, the acquired video will be between 30 and 40 seconds long.

The instructions 15-110 can be carried out by a second person (as shown in Figure 1).

In fact, instructions I1 and I2 have been specially studied to allow said second person to comfortably and easily carry out the subsequent instructions 15-110 of the protocol.

The instructions I3 and I4 have been specifically studied to position the foot in the optimal anatomical position for the subsequent design of the corrective and/or sports orthotic insole. In fact, the indicated position allows the recognition of salient points and lines which will be defined later in the description of the design.

The instructions I1 - I4 allow you to capture each foot F', F" with the plantar fascia under maximum tension. The positioning of the ankle at 90° and the maximum extension of the toes results in maximum tension of the plantar fascia. This allows the foot to be divided into different zones (medial, central and lateral) and to model the orthotic on the basis of this additional information. In addition, the full extension of the toes causes the tension of the soft tissue and reduces the possible artifact caused by the soft tissue itself. The complete extension therefore makes the subsequent 3D reconstruction of the foot and the identification of the fundamental anatomical points PAF1-PAF3 which will be described below more accurate.

The instructions 15, I6 and I7 have been specially studied to optimise the video for three-dimensional reconstruction using photogrammetry algorithms.

In detail, the supposing or overlay area defined in I5 has an ellipsoidal shape and is centred with respect to the acquisition area (as shown in Figure 1). The ellipse has a major axis with measurement AM whilst the minor axis has preferably a measurement equal to AM*3/4. The AM size can be defined on the basis of the acquisition device C for the video acquisition.

The instructions I8 and I9 ensure that the geometric information of the sole of the foot F'; F" and heel is obtained. In fact, the position of the acquisition device C in line with the foot allows the morphology of the heel to be acquired, whilst the prescribed movement around the foot allows the geometric information of the sole of the foot to be obtained. These instructions therefore ensure that the necessary morphological information is obtained for the correct reconstruction of the geometry of each foot and the subsequent prototyping of the corrective and/or sports orthotic insole.

Finally, the instruction I10 ensures that the video is of sufficient quality to extract the necessary information. In fact, the indicated rotation speed has been defined to ensure that the extrapolated frames have sufficient sharpness of the edges of the geometry of the foot (approximately 2 Ip/mm). Taking into account that the acquisition device may be of low quality, artificial intelligence algorithms may be used to increase the sharpness. For example, it is possible to use the Very-Deep Super-Resolution (VDSR) algorithm which uses a neural network to reconstruct a high resolution image from a low resolution one, recognising the main features of the image.

With regard to the photographic images, the illustrated acquisition protocol provides for the acquisition of a series of six photographic images F1-F6 designed to optimise the step for reconstruction of the geometries of the foot F' or F" and to model the corrective and/or sports orthotic insole 100 according to the specific needs. The instructions for following the protocol developed and the functionalities of each individual photo are described below. The instructions for acquiring the photographic images F1-F6 are as follows:
- acquiring a first photographic image F1 of the plantar arch of the right foot F' of the user, by placing the right foot F' on the edge of an A4 sheet, with the support points of the heel and of the metatarsus tangential to said edge. Keep the left foot F" raised. Take the photo F1 holding the acquisition device C in front of the medial malleolus of the right foot F' and keeping it at the same height as the malleolus. Figure 2 shows an example of a photo image F1 for the dataset performed according to the protocol instructions;
- acquiring a second photographic image F2 of the plantar arch of the left foot F" of the user, by placing the left foot F' on the edge of an A4 sheet, with the support points of the heel and of the metatarsus tangential to the edge. Keep the right foot F' raised. Take the photo F2 holding the acquisition device C in front of the medial malleolus and keeping it at the same height as the malleolus. The photo taken will be very similar to F1 but of the left foot F";

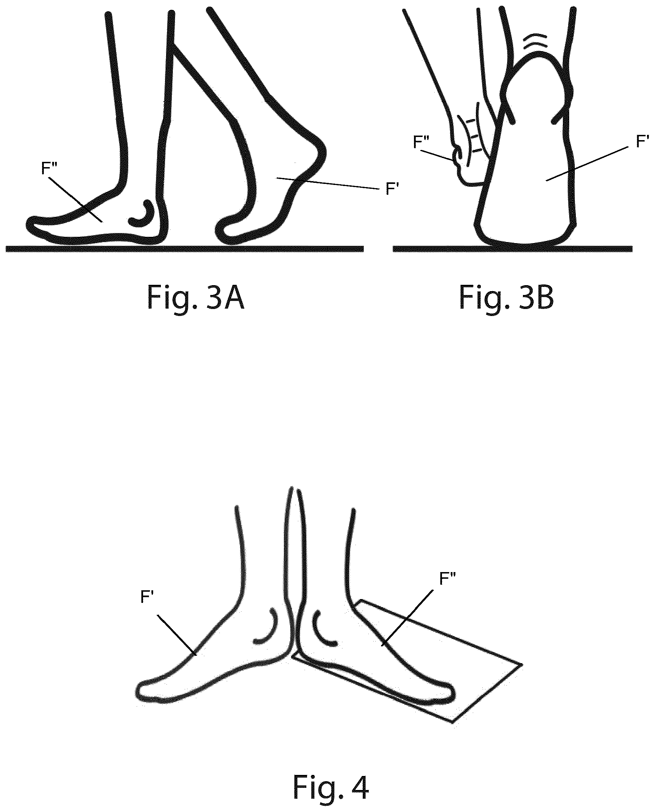

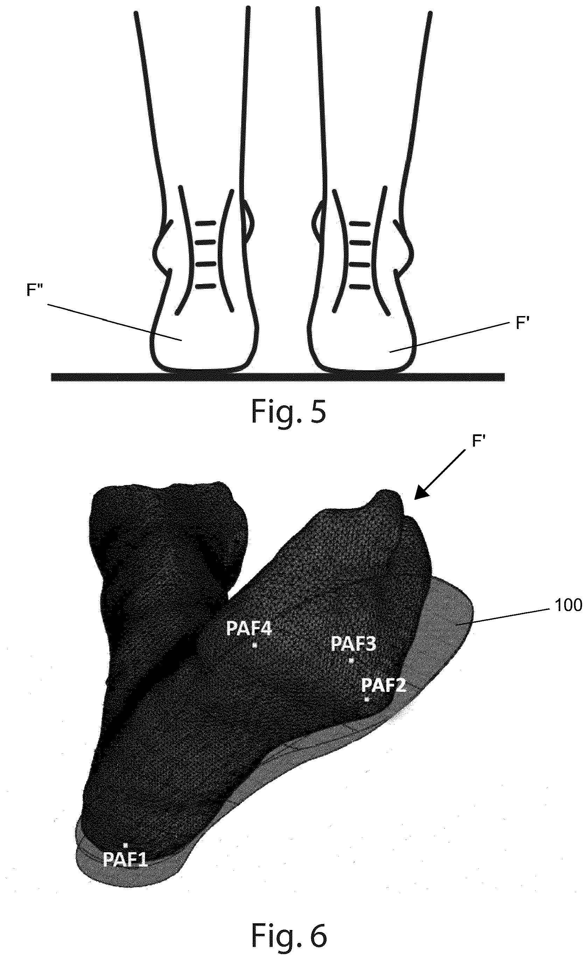

- acquiring a third photographic image F3 of the right foot F' of the user under load, making him/her position his/her right foot F' in such a way that it pushes on the toe and with the heel raised as in the act of walking. The left foot F" will be placed in front of the right foot F' to allow a clear view of the right foot F'. Take the photo F3 holding the acquisition device C in front of the medial malleolus and keeping it at the same height as the malleolus. Figure 3A shows an example of a photo image F3 for the dataset acquired according to the protocol instructions;
- acquiring a fourth photographic image F4 of the left foot F" of the user under load, making him/her position his/her left foot F" in such a way that it pushes on the toe and with the heel raised as in the act of walking. The right foot F' will be placed in front of the left foot F" to allow a clear view of the left foot F". Take the photo F4 holding the acquisition device C in front of the medial malleolus and keeping it at the same height as the malleolus. The photo F4 taken will be very similar to the third photographic image F3 but of the left foot;
- Acquiring a fifth photographic image F5 of the feet F', F" of the user with the heels joined together, making the user position the feet F', F" with the heels joined together and the toes separated to form a 90° angle with respect to the joining of the heels. Take the photo F6 holding the acquisition device C in front so as to frame the two medial zones of the feet F', F" and keeping it at the same height as the malleolus. Figure 4 shows an example of photo F5 for the dataset acquired according to the protocol instructions; and
- Acquiring a sixth photographic image F6 of the heels of the feet F', F" of the user, positioning the feet F', F" slightly apart (in line with the hip joint). Take the photo F6 holding the acquisition device C in the front of the heels and keeping it at the same height as the insertion of the Achilles tendon on the heel. Figure 5 shows an example of photo F6 for the dataset acquired according to the protocol instructions.

The photographic images F1 and F2 guarantee that the shape of the right foot F' and left foot F", respectively, under the load of the body is obtained. In this way, the photographic images F1 and F6 make it possible to outline the morphology of the plantar arch during one of the crucial phases of walking, namely the monopodal support phase. This information makes it possible to assess any deformities which occur under load which may cause illness or pain. The indicated framing also makes it possible to evaluate the trend of the longitudinal medial arch and its response to body weight. In this way it is possible to observe any pronation or supination of the foot.

In other words, the photographic images F1 and F2 of the right foot F' and left foot F" allow an assessment to be made of any structural failure of the feet F' or F" under load.

In fact, the medial view in monopodal support shows the adaptation of the foot F' or F" in the phase of maximum body weight support, it thus being possible to assess the variation of the articular and bone structures during one of the fundamental phases of walking.

These photographic images F1 and F2 also make it possible to assess the angle of the longitudinal medial arch, as well as the "index of the height of the medial arch", which are important measurements for assessing and differentiating a flat foot from a normal foot or a hollow foot.

The photographic images F3 and F4 guarantee that the shape of the right foot and left foot is obtained during the final phase of the walking. In more detail, the photo shown will allow an assessment to be made of the "toe-off" phase (that is, end of cycle) wherein the foot is about to detach from the ground to start the swinging phase leading to the next step. This frame makes it possible to assess the shape that the foot adopts during this last phase of pushing against the ground and to perceive any deformities or alterations in the walk.

Photo F5 makes it possible to assess any asymmetries as well as failure of the longitudinal plantar vaults. In fact, by keeping the feet with the heels together and the toes separated, there is an equal distribution of weight between the two feet. In this way it is possible to compare whether the failure or deformity of a foot F' or F" is present to the same extent in the contralateral foot F' or F". Moreover, there is a good view of the ankle joint.

In other words, the photo F5 of the feet F' and F" allows an assessment to be made of whether there is any dissymmetry between right and left side under equidistributed load. In fact, this representation makes it possible to observe any differences in the failure of the plantar arch or of the articular structure seen medially. From this image it is therefore possible to understand how to intervene in the subsequent phases of modelling and making the orthotic in order to correct any dissymmetry.

Photo F6 is used to assess the rear alignment of the foot with respect to the leg. In this frame, it is possible to assess the alignment of the calcaneare in a neutral position and with an equal distribution of weight between the two feet. From this analysis it is possible to estimate valgus or varus deformity of the articulation itself and to evaluate possible corrections.

In other words, the photo F6 of the feet F' and F" makes it possible to assess the rear alignment of the joints, also known as the "rearfoot angle". This parameter is used to quantify the degree of pronation or supination of the foot. Its importance and validity has been demonstrated in numerous clinical and scientific studies and is one of the most widely used measurements in the sector. From this information it is possible to classify the foot in various connotations.

The images F1-F6 and the videos obtained from the acquisition protocols described allow a dataset to be obtained comprising photographic images of the feet with sufficient information to reconstruct the three-dimensional geometry of a foot F' or F" and to integrate personalised information of the foot F' or F" in the next modelling and prototyping strep of the digital model 100 of the orthotic insole 1.

The expression "reconstructed geometry" of a foot F' or F" may be replaced below by the expression "three-dimensional geometry", "reconstructed mesh" or "mesh", "reconstructed model" or "reconstructed solid".

The reconstruction can be carried out by using photogrammetry algorithms developed ad hoc or commercial photogrammetry software. In detail, a sequence of frames can be calculated from the acquired video, in order to obtain an overlapping (that is, the percentage of image in a photograph related to a region of the space also taken from a nearby photograph) of 80%.

Thanks to the instructions 11-110 given, and using the sequence obtained, it will be possible to obtain a reconstructed three-dimensional solid of the F' or F" foot in the form of mesh type CAD files.

In particular, the example in Figure 6 shows a reconstructed mesh of a right foot F'.

Moreover, the reconstruction may include an optimisation step of the reconstructed mesh. The solid obtained can then be optimised thanks to mesh morphing algorithms, using the sequence of frames obtained from the video.

In particular, radial basis type functions for mesh morphing (that is, based on the distance between the points) can be used so that the position of the points identifying the characteristics of the sole of the foot in the frames coincides with the corresponding points of the reconstructed solid.

This will allow the correction of small reconstruction errors, guaranteeing the accuracy of the model and of the geometric features necessary for the prototyping of the corrective and/or sports orthotic insole.

Alternatively, a three-dimensional geometry of the foot F' or F" can be acquired directly by means of the acquisition device C, for example a 3D scanner or a smartphone equipped with a time-of-flight (ToF) sensor. In this case, the acquisition protocol may comprise only the acquisition of the photographic images F1-F6 and not the instructions 11-110.

Starting from the reconstructed solid of the foot F' or F" and the information obtained from the datasets of photographic image F1-F6, it is possible to create a digital prototype 100 or digital model 100 of the orthotic 1. This modelling phase can be semi-automatic, under the supervision of an operator or technician, or it can be fully automated, using specially trained machine learning algorithms.

In particular, during the CAD modelling phase of the orthotic insole 1, specific points, lines and/or curves are defined on the reconstructed model of foot F' or F" and on a digital model 100 of the insole or orthotic 1, thanks to which it is possible to model the final corrective and/or sports orthotic insole 1.

As mentioned, the positioning of these line and/or curve points and their modelling can be implemented by machine learning algorithms trained on the basis of acquired datasets.

In particular, the modelling phase may comprise the definition of the fundamental anatomical points PAF1-PAF3 and anatomical lines L1-L3, CM on the reconstructed model of the foot F' or F" and/or the digital model 100 of the insole.

Moreover, specific curves C1-C7 and points P1-P7 will be defined on said digital model 100 of the insole to be modelled. In particular, the construction parameters of the curves C1-C7 and the coordinates of the points P1-P7 may vary by 10% with respect to the instructions specified below.

User-specific clinical data can be integrated in this modelling step, such as, by way of example only, baropodometric data, force distribution, centre of mass position, MRI, CT, gait analysis.

In detail, it is possible to start from a digital model 100 of a native insole of the footwear where the orthotic 1 will be inserted, if possible, in order to guarantee the perfect adaptation of the insole to the footwear.

This makes it possible to optimise the modelling of orthotic 1, taking into account the shape of the footwear and guaranteeing the desired effect.

By way of example, the digital model 100 can be available on an e-commerce server, as described above, wherein footwear complete with the customised orthotic insole 1 is sold, modelled by means of the method according to the invention starting from the native insole of the footwear itself.

In this case, the datasets acquired during the acquisition step can be uploaded to the server, and the modelling step can take place directly on the server before or after the purchase of the footwear.

Alternatively, the native digital model 100 of the insole of the footwear, on the basis of which the orthotic insole 1 is to be modelled, can be downloaded from the server to the mobile acquisition device or other local device configured to perform the modelling step, and the final digital model 100 of the orthotic insole 1 modelled by means of CAD modelling can subsequently be sent to the e-commerce service for its production and delivery to the customer.

In the absence of specific information about the footwear, which will be worn with the orthotic insole 1 produced, it is possible to use a standard insole shape which takes into account the macro-category of footwear in which it will be inserted.

By way of example, the user may request the modelling of an orthotic insole 1 for ankle boots with a heel, and the modelling step will be carried out starting from a standard digital insole model 100 for this type of footwear.

A first step of the modelling comprises dimensioning the external boundary of the digital model 100 of the insole based on user/customer information.

After the correct dimensioning, the reconstructed model of the foot F' is positioned on the digital model 100 of the insole. This positioning starts from the identification of fundamental anatomical points PAF1-PAF4 on the reconstructed model of the foot F'.

In particular, the following fundamental anatomical points are used: the centre of the heel PAF1, the base of the first metatarsus PAF2, the base of the second metatarsus PAF3 and the base of the fifth metatarsus PAF4.

These points allow the correct positioning of the foot F' or F" with respect to the external boundary of the digital model 100 of the insole.

Figure 6 shows the points PAF1-PAF4 on a reconstructed model of the foot F' and the positioning of this reconstructed model on the digital model 100 of the insole. In particular, Figure 6 shows the reconstructed geometry of a right foot F' aligned on a digital model 100 of the insole.

The alignment of the reconstructed model of foot F' on the digital model 100 of the insole is carried out in the following way.

The reconstructed model of the foot F' or F" is initially positioned in a neutral position, with the points PAF1, PAF2 and PAF4 lying on the same plane. Starting from this neutral position, it is possible to rotate and incline the reconstructed model of the foot F' or F" in order to position it in the appropriate position for a necessary corrective need.

In particular, a technician may be able to manually modify parameters such as intra/extra rotation of the rear portion of the reconstructed model of the foot F'; F" directly during this step and not as a subsequent action. This offers an advantage in terms of active control over the final result and the corrective effectiveness of the final orthotic insole 1. In fact, the fact that a technician can use all the data collected since the beginning of modelling can make the final product more accurate.

The next step comprises the definition of anatomical lines of interest L1, L2, L3 on the digital model 100 of the insole and, consequently, of relative anatomical areas of interest.

In particular, three anatomical lines of interest L1, L2, L3 are drawn on the digital model 100 of the insole, corresponding to the projections of the connecting lines, respectively, between the centre of the heel and the base of the first metatarsus, between the centre of the heel and the base of the second metatarsus and between the centre of the heel and the base of the fifth metatarsus. A third degree curve CM is also drawn, also called the support curve CM, passing through the three points which identify the base of the first, second and fifth metatarsus.

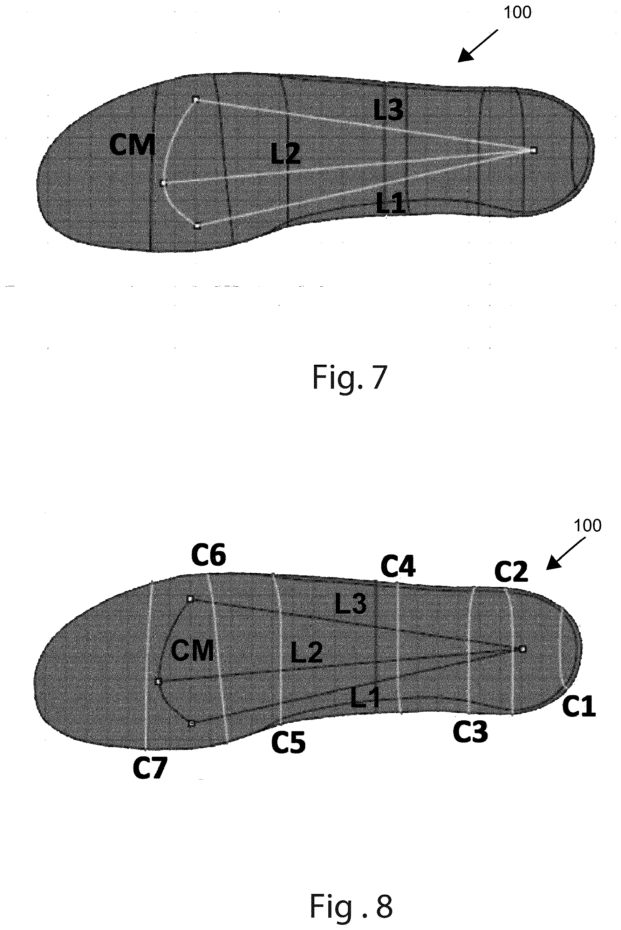

Figure 7 shows the three anatomical lines of interest L1, L2, L3 and the support curve CM just defined on said digital model 100 of the insole.

In other words, a first line of interest L1, relative to the connecting line between the centre of the heel and the base of the first metatarsus of the reconstructed model of the foot F', a second line of interest L2, relative to the connecting line between the centre of the heel and the base of the second metatarsus of the reconstructed model of the foot F', and a third line of interest L3, relative to the connecting line between the centre of the heel and the base of the fifth metatarsus of the reconstructed model of foot F', are drawn on the digital model 100 of the insole.

The first anatomical line of interest L1, passing between the base of the first metatarsus and the centre of the heel, identifies the medial part of the plantar fascia.

The second anatomical line of interest L2, passing between the base of the second metatarsus and the centre of the heel, allows identification of the longitudinal axis of the foot F'.

The third anatomical line of interest L3, passing between the base of the fifth metatarsus and the centre of the heel, identifies the lateral part of the plantar fascia.

A third degree curve CM is then constructed on said digital model 100 of the insole, passing through the three points that identify the base of the first, second and fifth metatarsus. These points are in fact the projection on the digital model 100 of the insole of the fundamental anatomical points PAF2, PAF3 and PAF4.

The support curve CM indicates the zone of contact of the metatarsal heads and is fundamental for defining the zone of contact of the foot with the ground, especially for the pushing phase, when the foot is about to detach from the ground.

According to a first alternative, equivalent to the step described, the fundamental anatomical points PAF1-PAF4 can be projected directly onto the digital model 100 of the insole. In this way, the construction of the anatomical lines of interest L1-L3 and the corresponding support curve CM can be made on the digital model 100 on the basis of these projected points.

According to a further equivalent alternative, the anatomical lines of interest L1-L3 can be defined directly on the reconstructed model of the foot F'; F" and then used to identify useful points P3-P5 on the digital model 100 of the insole, as illustrated below.

The positioning of the points PAF1 PAF2 PAF3 PAF4, the anatomical lines of interest L1 L2 L3 and the support curve CM defined can be automated by using machine learning trained on the basis of the datasets acquired according to the acquisition protocol described.

The anatomical areas of interest defined in this way are used during the 3D modelling step of the orthotic 1. In particular, the anatomical lines of interest L1, L2 and L3, which identify the medial and lateral part of the plantar fascia, will be used to guarantee the necessary comfort for the foot F'. In fact, an incorrect distribution of loads in the area of the plantar fascia could lead to severe pain and worsen the situation of the user.

The support curve CM of the metatarsal heads can, on the other hand, be used in the modelling method for the creation of design components of the orthotic insole 1, such as unloading zones, inserts for the creation of specific supports and adjustments necessary for the correct support of the foot.

In particular, the CAD modelling step shown in the drawings comprises the insertion of construction lines C1-C7 or construction curves C1-C7 perpendicularly to the longitudinal axis of the digital model 100 of the insole. These lines C1-C7 are used for the three-dimensional modelling of the upper surface of the orthotic 1 (the one that will come into contact with the sole of the user's foot). The construction curves C1-C7 are then positioned at specific points of the foot, which will be defined in more detail below.

These construction curves C1-C7 advantageously offer greater control over the design parameters for the orthotic insole 1, whilst at the same time limiting the possibility of error when creating the upper surface of the orthotic insole 1 itself, compared to prior art models comprising a plurality of points arranged substantially in a grid-type fashion.

The insertion step of the construction curves C1-C7 can also be automated by using machine learning trained on the basis of the acquired datasets.

In the example shown in Figure 8 there are seven construction curves C1-C7, as this number allows the modelling of an orthotic insole 1 for any corrective need with a low computational cost. However, according to alternative embodiments, a number of construction lines other than seven may be used.

In particular, as shown in Figure 8, a first construction curve C1 is spaced from the most distal point 101 (rear portion 101) of the digital model 100 of the insole by a distance equal to about 5% of the total length of the insole itself. This first construction curve C1 is used for the definition, on the digital model 100 of the orthotic, of the curvature of the heel area and for the definition, if necessary, of an enveloping and stabilising heel cup.

A second construction curve C2 is positioned at the point passing through the centre of the heel, that is, at the projection of said first fundamental anatomical point PAF1 on said digital model 100 of the insole. This point is usually located at between 5% and 15% of the length of the insole, that is, it is spaced from the rear 101 portion of the digital model 100 of the insole by a distance of between 5% and 15% of the total length of the insole.

The second construction curve C2 is used for the modelling of the heel zone and for the insertion of any structural modifications required on the digital model 100 of the orthotic, such as unloading areas, insertion of medial or lateral wedges, protrusions, etc.

A third construction curve C3 is positioned in the range of 15%-25% of the length of the insole, that is, it is spaced from the rear portion 101 of the digital model 100 of the insole by a distance of between 15% and 55% of the total length of the insole.

The third construction curve C3 identifies the proximal part of the calcaneus and the beginning of the next bone segment, and it is important for modelling the proximal part of the medial arch support on the digital model 100 of the orthotic.

A fourth construction curve C4 is positioned at the central point of the medial arch, about halfway between the point of contact of the heel (calcaneus) and the point of support of the first metatarsus, in the area of the joint between the navicular and cuneiform bones. The fourth construction curve C4 allows the highest part of the medial arch to be modelled on the digital model 100 of the orthotic. The correct modelling of this area allows an orthotic to be created with the necessary support to make the insole effective during motor activities and to make the necessary corrections in case of pathological feet.

A fifth construction curve of C5 is positioned at the distal area of the first metatarsus. The fifth construction curve C5 allows modelling of the curvature of the surface of the digital model 100 of the orthotic to match and accompany the end of the plantar arch as necessary.

A sixth construction curve C6 is positioned at the proximal phalanx, to adjust the height of the front zone on the digital model 100 of the orthotic and if necessary insert unloading points or phalanx supports.

Finally, a seventh construction curve C7 is placed on the front of the digital model 100 of the orthotic, to adjust the height of the area where the toes of the foot rest.

The support curve CM can be used for the correct positioning of the curves C6 and C7 in order to guarantee proper modelling, and any corrective changes, at the support zone, which often requires a support or an unloading point during modelling.

In more detail, the sixth construction curve C6 and the seventh construction curve C7 can be positioned before and after the support curve CM, in such a way that the CM support curve is surrounded by these construction curves C6, C7 (as shown in Figure 8).

Preferably, the respective distance between these construction curves C6 and C7 and the support curve CM can be approximately half the distance between the second fundamental anatomical point PAF2 and the third fundamental anatomical point PAF3, which varies from foot to foot. This distance is, in fact, an approximation of the radius of the first metatarsus.

The construction lines C6 and C7 positioned in this way can also be moved manually by the technician on the basis of the reconstruction of the digital model of the foot F'; F" for any corrections or needs.

As mentioned, Figure 8 shows the construction curves C1-C7 just defined on a digital model of the orthotic, together with the anatomical lines of interest L1-L3 and the support curve CM.

Each of the seven construction curves C1-C7 is subsequently divided into six segments by means of seven points P1-P7. The number of points P1-P7 has been studied in order to allow a simple, intuitive and uniform deformation of curves C1-C7 for the formation of the model of an orthotic insole 1, wherein the points P1-P7 can be inserted on the curves C1-C7 automatically.

However, according to alternative embodiments, a number of points P1-P7 other than seven may be used. For example, a number of points P1-P7 can be defined on the respective construction curve C1-C7 of less than seven, for example by imposing constraints on the tangents of these curves C1-C7.

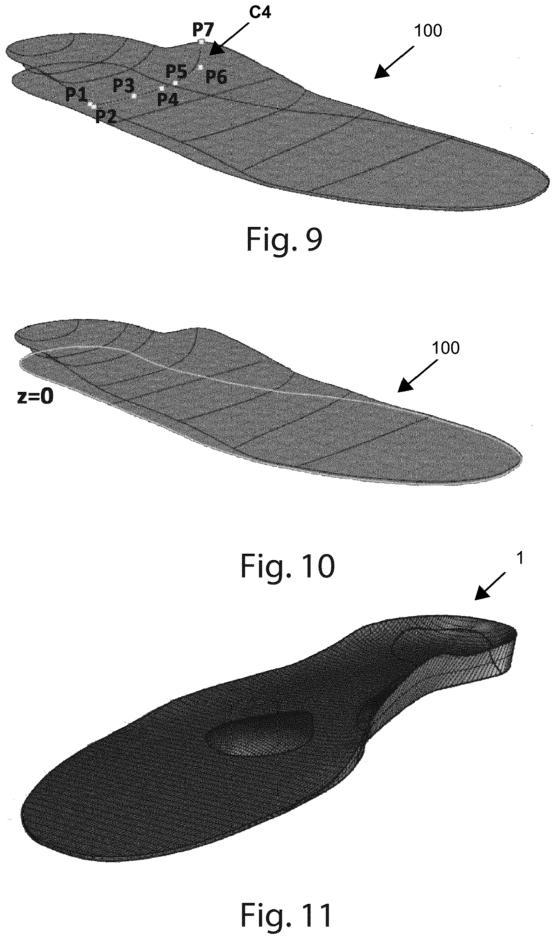

Figure 9 shows the points P1-P7 on the construction curve C4. However, in the modelling step, these points P1-P7 are defined for each of the construction curves C1-C7.

In particular, points P1-P7 are used to modify the positions along the vertical axis z of the construction curves C1-C7, which are used as a structure (skeleton) to define the surfaces of the digital model 100 of the orthotic.

Moreover, this machine-learning algorithm can be trained on the basis of the datasets acquired according to the acquisition protocol described, and in particular on the basis of the photographic images F1-F6, in such a way as to automatically assign the value of these positions, without the need for manual intervention by an operator.

These seven points P1-P7 comprise:
- a first point P1 and a seventh point P7, which are the end points of the respective construction curve C1-C7;
   a second point P2 and a sixth point P6, positioned on the relative construction curve C1-C7 at a distance of between 1 mm and 3 mm from the outer edge of the orthotic;
   a third point P3 and a fifth point P5, positioned on the relative construction curve C1-C7, at the first anatomical line of interest L1 and the third anatomical line of interest L3, respectively, or at a predefined distance from the longitudinal axis of the foot; and
   a fourth point P4, positioned on the relative construction curve C1-C7, at the second anatomical line of interest L2 or on the relative longitudinal axis of the foot F'; F".

In particular, the first point P1 and the seventh point P7 are used to ensure contact between the construction curves C1-C7 and the external boundary of the digital model 100 of the orthotic. These two points P1, P7 also lie, in fact, on the curve which outlines the boundary of the orthotic.

The second point P2 and the sixth point P6 are used to vary the starting curvature of the surface of the digital model 100 of the orthotic starting from the edge to ensure homogeneity and consistency.

The third point P3 and the fifth point P5 on the construction curves C2-C6 can be defined as the points of intersection with the respective anatomical lines of interest L1, L3, whilst on the first construction curve C1 and on the seventh construction curve C7, which do not intersect these anatomical lines of interest L1, L3, they can be defined as the points positioned at said predetermined distance from the longitudinal axis of the foot F'; F". In particular, this predetermined distance can be estimated as half the distance between the longitudinal axis (that is, the axis passing through the second anatomical line of interest L2) and the outer edge of the digital model 100 of the orthotic. However, this distance may vary in the order of 20% to meet any specific needs.

In this way, the third point P3 and the fifth point P5 can be used to define the positions along the vertical axis z of the surface of the digital model 100 of the orthotic at the anatomical areas of importance/interest, defined by the anatomical lines of interest L1, L3.

These anatomical areas of interest identify, in fact, the area of the medial vault and the lateral vault, that is, they approximate the respective areas of the plantar fascia. Specific measures may therefore be necessary at the area passing through these anatomical lines of interest L1 and L3.

In fact, this area is one of the most sensitive areas at the orthotic level and, therefore, needs specific measures in the modelling phase. It is therefore advisable to ensure that any corrective or non-corrective changes to the orthotic 1 do not cause deformities in the areas of the plantar fascia.

Moreover, thanks to the monitoring of the positions along the vertical axis z at the two lines of interest L1 and L3, that is, the external lines of the plantar fascia, it is possible to adjust the curvature of the surface of the digital model 100 of the orthotic, to maximise efficiency and comfort at the same time.

Photos F1-F6 can be used to determine the optimum positions of these points P3, P5.

The fourth point P4 for the construction curves C2-C6 can be defined as the point of intersection with the second anatomical line of interest L2, whilst for the first construction curve C1 and for the seventh construction curve C7 the point P4 can be defined as the point on the longitudinal axis of the foot F'; F".

This fourth point P4 serves to vary the position, along the vertical axis z, of the respective construction curve, in the zone corresponding to the longitudinal axis of the foot F'. Again, photos F1-F6 can be used to determine the optimum positions of this fourth point P4.

As mentioned, the definition of points P1-P7 and of the construction lines C1-C7, as well as the definition of the final positions of points P1-P7, may involve the use of clinical data, such as baropodometric data, force distribution, centre of mass position, MRI, CT, gait analysis. This allows specific modifications to be made which reflect the deformities and/or needs derived from the medical analysis. For example, it is possible to integrate the results of the baropodometric examinations to optimise the redistribution of the pressures and plantar forces during the walking phases.

Moreover, diagnostic imaging data can be used to position unloading points or structural changes in the orthotic 1 for specific needs such as, for example, a support to prevent structural collapse of the plantar joints, as in the case of flatfoot, or as in the case of pain associated with deformities such as, for example, pain associated with foot spur.

The upper surface of the digital model 100 of the orthotic 1 is then generated started from the construction curves C1-C7 thus defined and controlled in terms of curvature and homogeneity.

The external boundary of the orthotic can then be projected onto the horizontal plane passing through z=0 (that is, the plane containing the lower surface of the orthotic) during the modelling step. Figure 10 shows this projection on the plane z=0.

In other words, the external boundary of the digital model 100 of the insole can be projected onto the horizontal plane tangential to the lower surface of the digital model 100 itself.

This closed curve can be subsequently modified to allow the orthotic to adapt to the reference footwear and to take into account the necessary differences between the upper and lower surface of orthotic 1, in order to guarantee the necessary mechanical response for the user's needs.

The difference between the upper and lower surface at the medial arch, for example, guarantees a better elastic behaviour and at the same time increases the wearability and comfort level of the orthotic inside the footwear.

Once the lower boundary curve (z=0), the upper boundary curve, and the construction curves C1-C7 have been defined, and after changing the position of points P1-P7 along the vertical axis z for each of the construction curves C1-C7, CAD modelling functions are used to create the upper, lower, and lateral surfaces of the orthotic 1.

By way of example, the orthotic 1 can be obtained from the Boolean sum of the described surfaces.

The union of the curves thus created represents the final digital model of the orthotic 1. Figure 11 shows this final digital model of the orthotic 1.

Moreover, according to the method, before or during modelling, a trained operator/algorithm can select the final thickness of the digital model 100 of the orthotic insole 1, based on the material with which the physical model will then be made. In this way, the implemented method is not bound to the use of a single predefined material, but can be adapted to the use of materials with different mechanical properties and different mechanical responses under stress.

Any further modifications can be made to the final digital model 100 of the orthotic 1, which are necessary to increase the therapeutic or performance effectiveness of the orthotic 1, such as the insertion of back supports at the level of the metatarsal heads, designed to redistribute the forces and obtain an anatomical curvature of the transversal arch. It is also possible to create flarings or housings to reduce locally the pressures and recreate anatomical physiological curvatures at the level of the metatarsal heads. Additionally, specific supports can be inserted in areas of interest, such as individual metatarsal support bars or medial or lateral arch support bars. Finally, wedges necessary for a rotation of the foot at the front, back or both can be inserted to realign the joints in a physiological manner.

In other words, it is possible for an operator to locally modify the internal structure of the digital model 100 of the orthotic insole 1 to obtain different mechanical responses before, during or after the modelling step. In this way, the operator can have greater freedom of choice compared with fully automated methods.

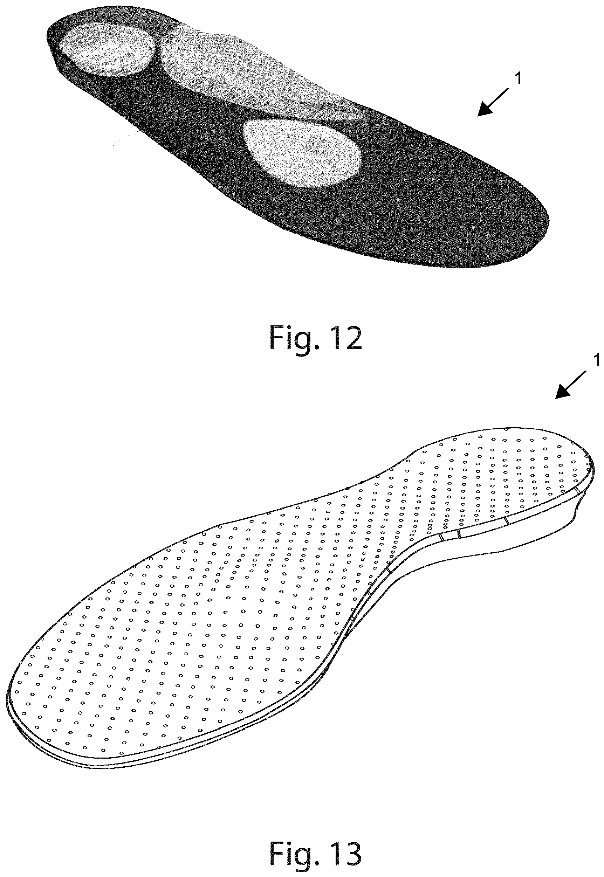

Figure 12 shows some of the zones that can be modified on a digital model 100 of the orthotic 1.

Upon completion of the modelling there is a production step of the CAD model produced.

Although there is no restriction on the production method, the method developed finds its greatest advantages in additive manufacturing (3D printing).

In fact, it is possible to produce an orthotic insole 1 starting from the digital model 100 obtained by means of 3D printing, for example by optimising one or more of the following 3D printing production parameters:
- extrusion overflow between 95% and 140%;
- print speed (that is, extruder movement speed) between 1600 and 2400 mm/min; and
- use of material with a hardness index (shore) of between A70 and A95.

Since, as described, the digital model 100 of the orthotic 1 developed consists of several zones directly defined on the basis of the anatomy of the foot F' or F' and the data provided, these zones can be differentiated in terms of mechanical response by modifying the production parameters.

By way of example, the extrusion flow, the printing speed (that is, extruder movement speed), the use of material with a hardness index (Shore) between A70 and A95 can be varied to differentiate this mechanical response.

Moreover, zones can be defined with a lower density or with different infill geometries (e.g. honeycomb, gyroid, rectangular) to guarantee a different stiffness of the structure (with a consequent redistribution of the pressures on the foot) and a different mechanical response. In fact, it is possible to reduce the pressure locally by inserting custom-made geometries in specific areas such as the heel and metatarsal heads.

Higher density zones can also be inserted to create support zones where necessary, such as the medial arch. An example of an orthotic produced by 3D printing following a procedure according to the invention is shown in Figure 13.

In summary, the disclosure relates to a method for the production of a customised corrective and/or sports orthotic insole 1 which comprises:
- a protocol for the acquisition and definition of datasets, in particular datasets of images and videos, for the modelling of a customised orthotic insole 1; and
- a CAD design and modelling method for a corrective and/or sports orthotic insole 1.

The method, according to the disclosure, may comprise the acquisition of two videos (one for each foot) according to the protocol established and detailed in the description. In particular, the method may provide for specific positioning of the foot F' or F' and of the acquisition device C in order to comply with instructions I1 to I10. The videos acquired can in fact constitute a fundamental part of the dataset for the production of the orthotic insole 1 according to the method of the invention.

The method according to the disclosure may also comprise the acquisition of a total of six photos according to the protocol described. More in detail, the method may comprise acquiring the photos F1-F6 following the instructions described, creating a photographic database for the production of the orthotic insole.

During the acquisition of both videos and photos, the method according to the invention may comprise the use of special clothing (that is, socks, stockings, bands, meshes).

The method according to the disclosure may also comprise the definition of the fundamental anatomical points PAF1 PAF2 PAF3 PAF4 and the anatomical lines L1 L2 L3 CM as defined above.

In particular, the procedure for positioning the points PAF1 PAF2 PAF3 PAF4 and the anatomical lines L1 L2 L3 CM can be carried out using machine learning trained on the basis of the datasets acquired exclusively according to the acquisition protocol defined above.

Moreover, the method according to the disclosure may comprise the definition of the curves C1 to C7 of the points P1 to P7 identified in the description.

In particular, the method according to the disclosure may comprise modifying the coordinates of the points P1-P7 and the construction parameters of the curves C1-C7 in a range of 10% with respect to what is described.

Moreover, the method according to the disclosure can comprise the optimisation of production parameters through 3D printing such as:
- extrusion overflow between 95% and 140%;
- print speed (that is, extruder movement speed) between 1600 and 2400 mm/min;
- use of material with a hardness index (shore) of between A70 and A95.

Furthermore, the method according to the disclosure can integrate clinical data such as, by way of example only and certainly not exhaustive, baropodometric data, force distribution, centre of mass position, MRI, CT, gait analysis.

The preferred embodiments have been described above and variants to the invention have been suggested, but it shall be understood that the invention may be modified and/or adapted by experts in the field without thereby departing from the scope of the inventive concept, which is defined by the appended claims.

## Claims

1. A method for the production of a customised corrective and/or sports orthotic insole (1) for a foot (F', F") of a user, comprising the following steps:
A. acquiring a dataset comprising photographic images of said foot (F'; F") and a reconstructed model of said foot (F'; F"), said reconstructed model of said foot (F'; F") being a three-dimensional digital model of said foot (F'; F"); and
B. designing and modelling, by means of CAD modelling, said corrective and/or sports orthotic insole (1) starting from said reconstructed model of said foot (F'; F"), from said dataset comprising photographic images of said foot (F'; F") and from a digital model (100) of the insole of a reference shoe, wherein said CAD modelling comprises the following sub-steps:
B1. dimensioning said digital model (100) of the insole on the basis of the dimensions of said foot (F', F");
B2. identifying on said reconstructed model of said foot (F'; F") predefined fundamental anatomical points (PAF1-PAF4) wherein
a first fundamental anatomical point (PAF1) is the centre of the heel,
a second fundamental anatomical point (PAF2) is the base of the first metatarsus,
a third fundamental anatomical point (PAF3) is the base of the second metatarsus, and
a fourth fundamental anatomical point (PAF4) is the base of the fifth metatarsus;
B3. positioning said reconstructed model of said foot (F'; F") in a neutral position with respect to the external boundary of said digital model (100) of the dimensioned insole, with said first fundamental anatomical point (PAF1), said second fundamental anatomical point (PAF2) and said fourth fundamental anatomical point (PAF4) lying on a same plane;
B4. after said positioning of said reconstructed model of said foot (F'; F") in a neutral position, rotating and inclining said reconstructed model of said foot (F'; F"), in particular so as to position it in a position suitable for a predefined corrective need;
B5. after said rotation and inclination of said reconstructed model of said foot (F'; F"), defining three anatomical lines of interest (L1-L3) on said digital model (100) of the insole, wherein
a first anatomical line of interest (L1) is relative to the line passing between the base of the first metatarsus and the centre of the heel of said reconstructed model of the foot (F'; F"), for identifying the medial part of the plantar fascia,
a second anatomical line of interest (L2) is relative to the line passing between the base of the second metatarsus and the centre of the heel, for identifying the longitudinal axis of the foot, and
a third anatomical line of interest (L3) is relative to the line passing between the base of the fifth metatarsus and the centre of the heel, for identifying the lateral part of the plantar fascia;
B6. constructing on said digital model (100) of the insole a plurality of construction curves (C1-C7), substantially perpendicular to said second anatomical line of interest (L2), for the three-dimensional modelling of the upper surface of said orthotic insole (1);
B7. defining on each of said construction curves (C1-C7) at least three points (P3-P5) in correspondence of said anatomical lines of interest (L1-L3) or at a predetermined distance from said longitudinal axis of said foot (F'; F") identified by means of said second anatomical line of interest (L2); and
B8. using said dataset comprising photographic images of said foot (F'; F") for modifying the positions of said three points (P3-P5) along a vertical axis (z), in order to model the geometry of the upper surface of said orthotic insole (1).

2. The method according to claim 1, **characterised in that**, in said sub-step B5 a support curve (CM) is also constructed on said digital model (100), said support curve (CM) being approximate with a third degree curve passing through three points relative to the base of the first, second and fifth metatarsal, in such a way as to indicate the contact zone of the metatarsal heads and identify the zone of contact of the foot with the ground during the pushing phase, when the foot is about to detach from the ground.

3. The method according to any one of the preceding claims, **characterised in that**, in said sub-step B6, seven construction curves (C1-C7) are constructed on said digital model (100) of the insole, wherein
a first construction curve (C1) is spaced from the rear portion (101) of said digital model (100) of the insole by a distance equal to 5% of the total length of said insole, in such a way as to define the curvature of the zone of the heel of said foot (F') on said upper surface of said orthotic insole (1);
a second construction curve (C2) is positioned at the projection of said first fundamental anatomical point (PAF1) of said reconstructed model of said foot (F'; F") on said digital model (100) of the insole, in such a way as to define the zone of the heel of said foot (F'; F") on said upper surface of said orthotic insole (1);
a third construction curve (C3) is spaced from the rear portion (101) of said digital model (100) of the insole by a distance of between 15% and 25% of the total length of said insole, in such a way as to model the proximal part of the medial arch support for said foot (F'; F") on said upper surface of said orthotic insole (1);
a fourth construction curve (C4) is positioned at the central point of the medial arch, about halfway between the point of contact of the heel and the point of support of the first metatarsus, in the area of the joint between the navicular and cuneiform bones, in such a way as to allow the modelling of the highest part of the medial arch for said foot (F'; F") on said upper surface of said orthotic insole (1);
a fifth construction curve (C5) is positioned at the distal zone of the first metatarsus, in such a way as to be able to optimise the curvature of said upper surface of said orthotic insole (1);
a sixth construction curve (C6) is positioned at the proximal phalanx, in such a way as to adjust the height of the front zone of said upper surface of said orthotic insole (1); and
a seventh construction curve (C7) is positioned on the front portion of said digital model (100) of the insole, to adjust the height of the zone where the toes of the foot (F'; F") rest on said upper surface of said orthotic insole (1).

4. The method according to any one of the preceding claims, **characterised in that**, in said sub-step B7, for each of said construction curves (C1-C7) seven points (P1-P7) are defined, wherein
a first point (P1) and a seventh point (P7) of said seven points (P1-P7) are the end points (P1, P7) and lie on the outer edge of said digital model (100) of the insole;
a second point (P2) and a sixth point (P6) of said seven points (P1-P7) are placed at a distance between 1 mm and 3 mm from said outer edge of said digital model (100) of the insole; and
a third point (P3), a fourth point (P4) and a fifth point (P5) are said three points (P3-P5);
wherein, during said sub-step B8, the positions of said first point (P1), second point (P2), sixth point (P6) and seventh point (P7) are modified along said vertical axis (z) to model said upper surface of said orthotic insole (1).

5. The method according to any one of the preceding claims, **characterised in that**, during said step B., the external boundary of said digital model (100) of the insole is projected on a horizontal plane tangential to the lower surface of said digital model (100), said projection of said external boundary being subsequently modified to allow the adaptation of the orthotic insole (1) produced to said reference footwear.

6. The method according to any one of the preceding claims, **characterised in that** said dataset acquired in said step A. comprises six photographic images (F1-F6) acquired by means of an acquisition device (C) equipped with a lens through the following sub-steps:
A1. acquiring, by means of said acquisition device (C), a first photographic image (F1) of the plantar arch of the right foot (F'), said first photographic image (F1) being acquired after having positioned said right foot (F') on an edge of an A4 sheet, with the support points of the respective heel and metatarsus tangential with said edge, and keeping the left foot (F") raised, wherein said acquisition device (C) is placed in front of the medial malleolus of said right foot (F') and is kept at the same height as said malleolus during said acquisition;
A2. acquiring, by means of said acquisition device (C), a second photographic image (F2) of the plantar arch of the left foot (F'), said second photographic image (F2) being acquired after having positioned said left foot (F") on an edge of an A4 sheet, with the support points of the respective heel and metatarsus tangential with said edge, and keeping the right foot (F') raised, wherein said acquisition device (C) is placed in front of the medial malleolus of said left foot (F") and is kept at the same height as said malleolus during said acquisition;
A3. acquiring, by means of said acquisition device (C), a third photographic image (F3) of the right foot (F') under load, wherein said right foot (F') pushes on the respective toe and has the heel raised as in the act of walking, the left foot (F") being placed in front of said right foot (F'), wherein said acquisition device (C) is placed in front of the medial malleolus and is kept at the same height as said malleolus during said acquisition;
A4. acquiring, by means of said acquisition device (C), a fourth photographic image (F4) of the left foot (F") under load, wherein said left foot (F") pushes on the respective toe and has the heel raised as in the act of walking, the right foot (F') being placed in front of said left foot (F"), wherein said acquisition device (C) is placed in front of the medial malleolus and is kept at the same height as said malleolus during said acquisition;
A5. acquiring, by means of said acquisition device (C), a fifth photographic image (F5) of the feet (F', F") with heels joined, wherein both feet (F', F") are positioned with the heels joined and the toes separated to form a 90° angle with respect to the joining of said heels, said acquisition device (C) being placed in front of said feet (F', F") in such a way as to frame the two medial zones of the respective feet and kept at the same height as the malleoli during said acquisition; and
A6. acquiring, by means of said acquisition device (C), a sixth photographic image (F6) of the heels of both feet (F', F"), wherein said feet (F', F") are placed apart, in line with the joint of their respective hips, said acquisition device (C) being placed in front of the heels of said feet (F', F") and maintained at the same height as the insertion of the Achilles tendon on the heel of said feet (F', F").

7. The method according to any one of the preceding claims, **characterised in that** the points (PAF1-PAF3, P1-P7), the lines (L1-L3) and the curves (CM; C1-C7) used during said step B. are calculated using a machine learning algorithm trained on the basis of said dataset comprising photographic images of said foot (F'; F") acquired in said step A.

8. The method according to any one of the preceding claims, **characterised in that** the said reconstructed model of said foot (F'; F") is reconstructed starting from a plurality of frames of a video of said foot (F'; F"), with the acquisition of a video for each foot (F'; F") being performed by means of said acquisition device (C) following the following instructions:
I1. letting said user stretch one leg (L), resting it on a support (R), in such a way that said leg (L) is parallel to the ground;
I2. making the foot (F'; F") relative to said leg protrude from said support (R), in such a way that said foot (F'; F") is suspended from the ankle onwards;
I3. keeping said foot (F'; F") with the relative sagittal plane and plantar plane perpendicular to the longitudinal axis of the leg;
I4. extending in an active and maximum manner the toes of said foot (F'; F");
I5. acquiring a video of said foot (F'; F") by means of said acquisition device (C), rotating said acquisition device (C) around said foot in such a way that said acquisition device (C) remains always within a predefined overlapping area,
wherein said instruction I5 is performed by rotating said acquisition device (C) around said foot with a rotation between 200° and 300° and a constant speed of movement of about 7.5 deg/s, keeping said lens of said acquisition device (C) at a distance of one metre from said foot (F'; F"), with said lens placed at the same height as said foot (F'; F") with respect to the ground, and avoiding positioning reflective surfaces in said acquisition area and exposure to direct light sources.

9. The method according to claim 8, wherein said plurality of frames is extracted, starting from a video of a respective foot (F'; F"), wherein 80% of the image of a frame relative to a region of the filmed space is superimposed on a subsequent frame,
said reconstructed model of said foot (F'; F") being obtained in the form of a CAD file of the mesh type starting from said plurality of frames.

10. The method according to any one of the preceding claims, **characterised in that** clinical data of said user are integrated in said step B., in particular baropodometric data, force distribution, centre of mass position, MRI, CT, gait analysis.

11. The method according to any one of the preceding claims, **characterised in that** said step A. is performed by means of a mobile acquisition device, in particular a smartphone or tablet, configured to acquire said dataset comprising photographic images of said foot (F'; F") and a reconstructed model of said foot (F'; F") and send it to a remote server control unit, and **in that** said step B. is performed by means of said remote server control unit.

12. A system comprising means configured for the execution of the steps of a method according to any one of the preceding claims.

13. The system according to claim 12, **characterised in that** it comprises a mobile acquisition device and a control unit of a remote server, wherein said mobile acquisition device is configured to acquire said dataset comprising photographic images of said foot (F'; F") and a reconstructed model of said foot (F'; F") and send it to said control unit of said remote server, and wherein said control unit is configured to perform said step B.

14. A computer program comprising instructions such that, when said program is run by a system according to Claims 12 or 13, they cause the execution of the steps of a method according to any one of Claims 1 to 11 by means of said system.

15. A data carrying signal, which carries the instructions of a program according to claim 14.

## Patentansprüche

1. Verfahren zur Herstellung einer individuell angepassten korrigierenden und/oder sportorthopädischen Einlage (1) für einen Fuß (F', F") eines Benutzers, umfassend die folgenden Schritte:
A. Erfassen eines Datensatzes, umfassend fotografische Bilder des Fußes (F'; F") und ein rekonstruiertes Modell des Fußes (F'; F"), wobei das rekonstruierte Modell des Fußes (F'; F") ein dreidimensionales digitales Modell des Fußes (F'; F") ist; und
B. Konstruieren und Modellieren, mittels CAD-Modellierung, der korrigierenden und/oder sportorthopädischen Einlegesohle (1) anhand des rekonstruierten Modells des Fußes (F'; F"), aus dem Datensatz, umfassend fotografische Bilder des Fußes (F'; F"), und aus einem digitalen Modell (100) der Einlegesohle eines Referenzschuhs, wobei das CAD-Modellieren die folgenden Teilschritte umfasst:
B1. Bemessen des digitalen Modells (100) der Einlegesohle basierend auf den Abmessungen des Fußes (F', F");
B2. Identifizieren auf dem rekonstruierten Modell des Fußes (F'; F") von vordefinierten grundlegenden anatomischen Punkten (PAF1-PAF4), wobei ein erster grundlegender anatomischer Punkt (PAF1) die Mitte der Ferse ist,
ein zweiter grundlegender anatomischer Punkt (PAF2) die Basis des ersten Mittelfußes ist,
ein dritter grundlegender anatomischer Punkt (PAF3) die Basis des zweiten Mittelfußes ist, und
ein vierter grundlegender anatomischer Punkt (PAF4) die Basis des fünften Mittelfußes ist;
B3. Positionieren des rekonstruierten Modells des Fußes (F'; F") in einer neutralen Position in Bezug auf die äußere Abgrenzung des digitalen Modells (100) der bemessenen Einlegesohle, wobei der erste fundamentale anatomische Punkt (PAF1), der zweite fundamentale anatomische Punkt (PAF2) und der vierte fundamentale anatomische Punkt (PAF4) auf einer gleichen Ebene liegen;
B4. nach dem Positionieren des rekonstruierten Modells des Fußes (F'; F") in einer neutralen Position, Drehen und Neigen des rekonstruierten Modells des Fußes (F'; F"), insbesondere um es in einer Position zu positionieren, die für einen vordefinierten Korrekturbedarf geeignet ist;
B5. nach der Drehung und Neigung des rekonstruierten Modells des Fußes (F'; F"), Definieren von drei anatomischen Linien von Interesse (L1- L3) auf dem digitalen Modell (100) der Einlegesohle, wobei
eine erste anatomische Linie von Interesse (L1) sich auf die Linie bezieht, die zwischen der Basis des ersten Mittelfußes und der Mitte der Ferse des rekonstruierten Modells des Fußes (F'; F") verläuft, um den medialen Teil der Plantarfaszie zu identifizieren,
eine zweite anatomische Linie von Interesse (L2) in Bezug auf die Linie, die zwischen der Basis des zweiten Mittelfußes und der Mitte der Ferse verläuft, um die Längsachse des Fußes zu identifizieren, und
eine dritte anatomische Linie von Interesse (L3) sich auf die Linie bezieht, die zwischen der Basis des fünften Mittelfußes und der Mitte der Ferse verläuft, um den seitlichen Teil der Plantarfaszie zu identifizieren;
B6. Erstellen einer Vielzahl von Erstellungskurven (C1-C7) auf dem digitalen Modell (100) der Einlegesohle, die im Wesentlichen senkrecht zu der zweiten anatomischen Linie von Interesse (L2) verlaufen, zum dreidimensionalen Modellieren der oberen Fläche der orthopädischen Einlegesohle (1);
B7. Definieren von mindestens drei Punkten (P3-P5) auf jeder der Erstellungskurven (C1-C7) in Übereinstimmung mit den anatomischen Linien von Interesse (L1-L3) oder in einem vorbestimmten Abstand von der Längsachse des Fußes (F'; F"), die mittels der zweiten anatomischen Linien von Interesse (L2) identifiziert wird; und
B8. Verwenden des Datensatzes, umfassend fotografische Bilder des Fußes (F'; F"), um die Positionen der drei Punkte (P3-P5) entlang einer vertikalen Achse (2) zu modifizieren, um die Geometrie der oberen Fläche der orthopädischen Einlegesohle (1) zu modellieren.

2. Verfahren nach Anspruch 1, **dadurch gekennzeichnet, dass** in dem Teilschritt B5 auch eine Stützkurve (CM) auf dem digitalen Modell (100) erstellt wird, wobei die Stützkurve (CM) mit einer Kurve dritten Grads angenähert wird, die durch drei Punkte in Bezug auf die Basis des ersten, zweiten und fünften Mittelfußknochens verläuft, auf eine Weise, um den Kontaktbereich der Mittelfußköpfe anzugeben und der Kontaktbereich des Fußes während der Schubphase mit dem Boden identifiziert wird, wenn der Fuß dabei ist, sich vom Boden zu lösen.

3. Verfahren nach einem der vorherigen Ansprüche, **dadurch gekennzeichnet, dass** in dem Teilschritt B6 sieben Erstellungskurven (C1-C7) an dem digitalen Modell (100) der Einlegesohle erstellt werden, wobei eine erste Erstellungskurve (C1) von dem hinteren Abschnitt (101) des digitalen Modells (100) der Einlegesohle um einen Abstand von 5 % der Gesamtlänge der Einlegesohle beabstandet ist, um die Krümmung des Bereichs der Ferse des Fußes (F') auf der Oberseite der orthopädischen Einlegesohle (1) zu definieren;
eine zweite Erstellungskurve (C2) an der Projektion des ersten grundlegenden anatomischen Punkts (PAF1) des rekonstruierten Modells des Fußes (F'; F") auf dem digitalen Modell (100) der Einlegesohle positioniert ist, auf eine Weise, um den Bereich der Ferse des Fußes (F'; F") auf der oberen Fläche der orthopädischen Einlegesohle (1) zu definieren;
eine dritte Erstellungskurve (C3) von dem hinteren Abschnitt (101) des digitalen Modells (100) der Einlegesohle um einen Abstand zwischen 15 % und 25 % der Gesamtlänge der Einlegesohle beabstandet ist, auf eine Weise, um den proximalen Teil der medialen Fußgewölbestütze (F'; F") auf der oberen Oberfläche der orthopädischen Einlegesohle (1) zu modellieren; eine vierte Erstellungskurve (C4) an dem mittleren Punkt des Mittelfußgewölbes, etwa auf halbem Weg zwischen dem Kontaktpunkt der Ferse und dem Stützpunkt des ersten Mittelfußes, im Bereich des Gelenks zwischen dem Kahnbein und dem Keilbein, positioniert ist, auf eine Weise, um die Modellierung des höchsten Teils des Mittelfußgewölbes für den Fuß (F'; F") auf der Oberfläche der orthopädischen Einlegesohle (1) zu ermöglichen;
eine fünfte Erstellungskurve (C5) in dem distalen Bereich des ersten Mittelfußes positioniert ist, auf eine Weise, um in der Lage zu sein, die Krümmung der oberen Oberfläche der orthopädischen Einlegesohle (1) zu optimieren;
eine sechste Erstellungskurve (C6) an der proximalen Phalanx positioniert ist, auf eine Weise, um die Höhe des vorderen Bereichs der oberen Oberfläche der orthopädischen Einlegesohle (1) einzustellen; und
eine siebte Erstellungskurve (C7) auf dem vorderen Abschnitt des digitalen Modells (100) der Einlegesohle positioniert ist, um die Höhe des Bereichs einzustellen, wo die Zehen des Fußes (F'; F") auf der oberen Oberfläche der orthopädischen Einlegesohle (1) aufliegen.

4. Verfahren nach einem der vorherigen Ansprüche, **dadurch gekennzeichnet, dass** in dem Teilschritt B7 für jede der Erstellungskurven (C1-C7) sieben Punkte (P1-P7) definiert werden, wobei ein erster Punkt (P1) und ein siebter Punkt (P7) der sieben Punkte (P1-P7) die Endpunkte (P1, P7) sind und auf dem äußeren Rand des digitalen Modells (100) der Einlegesohle liegen;
ein zweiter Punkt (P2) und ein sechster Punkt (P6) der sieben Punkte (P1-P7) in einem Abstand zwischen 1 mm und 3 mm von der Außenkante des digitalen Modells (100) der Einlegesohle platziert sind; und
ein dritter Punkt (P3), ein vierter Punkt (P4) und ein fünfter Punkt (P5) die drei Punkte (P3-P5) sind;
wobei während des Teilschritts B8 die Positionen des ersten Punkts (P1), des zweiten Punkts (P2), des sechsten Punkts (P6) und des siebten Punkts (P7) entlang der vertikalen Achse (z) modifiziert werden, um die obere Oberfläche der orthopädischen Einlage (1) zu modellieren.

5. Verfahren nach einem der vorherigen Ansprüche, **dadurch gekennzeichnet, dass** während des Schritts B. die äußere Abgrenzung des digitalen Modells (100) der Einlegesohle auf eine horizontale Ebene projiziert wird, die tangential zu der unteren Oberfläche des digitalen Modells (100) verläuft, wobei die Projektion der äußeren Begrenzung anschließend modifiziert wird, um die Anpassung der hergestellten orthopädischen Einlegesohle (1) an das Referenzschuhwerk zu ermöglichen.

6. Verfahren nach einem der vorherigen Ansprüche, **dadurch gekennzeichnet, dass** der im Schritt A. erfasste Datensatz sechs fotografische Bilder (F1-F6) umfasst, die mittels einer Erfassungsvorrichtung (C) erfasst werden, die mit einem Objektiv ausgestattet ist, durch die folgenden Teilschritte:
A1. Erfassen, mittels der Erfassungsvorrichtung (C), eines ersten fotografischen Bilds (F1) des Fußgewölbes des rechten Fußes (F'), wobei das erste fotografische Bild (F1) erfasst wird, nachdem der rechte Fuß (F') auf einer Kante eines A4-Blatts positioniert wurde, wobei die Auflagepunkte der jeweiligen Ferse und des Mittelfußes tangential zu der Kante liegen und der linke Fuß (F") angehoben gehalten wird, wobei die Erfassungsvorrichtung (C) vor dem Schienbeinknöchel des rechten Fußes (F') platziert ist und während der Erfassung auf der gleichen Höhe wie der Knöchel gehalten wird;
A2. Erfassen, mittels der Erfassungsvorrichtung (C), eines zweiten fotografischen Bilds (F2) des Fußgewölbes des linken Fußes (F'), wobei das zweite fotografische Bild (F2) erfasst wird, nachdem der linke Fuß (F") auf einer Kante eines A4-Blatts positioniert wurde, wobei die Auflagepunkte der jeweiligen Ferse und des Mittelfußes tangential zu der Kante liegen und der linke Fuß (F") angehoben gehalten wird, wobei die Erfassungsvorrichtung (C) vor dem Schienbeinknöchel des linken Fußes (F") platziert ist und während der Erfassung auf der gleichen Höhe wie der Knöchel gehalten wird;
A3. Erfassen, mittels der Erfassungsvorrichtung (C), eines dritten fotografischen Bilds (F3) des rechten Fußes (F') unter Belastung, wobei der rechte Fuß (F') auf die jeweilige Zehe drückt und die Ferse wie beim Gehen angehoben ist, wobei der linke Fuß (F") vor dem rechten Fuß (F') platziert ist, wobei die Erfassungsvorrichtung (C) vor dem Schienbeinknöchel platziert ist und während der Erfassung auf der gleichen Höhe wie der Knöchel gehalten wird;
A4. Erfassen, mittels der Erfassungsvorrichtung (C), eines vierten fotografischen Bilds (F4) des linken Fußes (F") unter Belastung, wobei der rechte Fuß (F') auf die jeweilige Zehe drückt und die Ferse wie beim Gehen angehoben ist, wobei der linke Fuß (F") vor dem rechten Fuß (F') platziert ist, wobei die Erfassungsvorrichtung (C) vor dem Schienbeinknöchel platziert ist und während der Erfassung auf der gleichen Höhe wie der Knöchel gehalten wird;
A5. Erfassen, mittels der Erfassungsvorrichtung (C), eines fünften fotografischen Bilds (F5) der Füße (F', F") mit verbundenen Fersen, wobei beide Füße (F', F") mit verbundenen Fersen positioniert sind und die Zehen getrennt sind, um einen 90 °-Winkel in Bezug auf die Verbindung der Fersen zu bilden, wobei die Erfassungsvorrichtung (C) vor den Füßen (F', F") platziert ist, auf eine Weise, um die zwei medialen Bereiche der jeweiligen Füße einzurahmen und während der Erfassung auf der gleichen Höhe wie die Knöchel gehalten wird; und
A6. Erfassen, mittels der Erfassungsvorrichtung (C), eines sechsten fotografischen Bilds (F6) der Fersen der beiden Füße (F', F") wobei die Füße (F', F") in Höhe des Gelenks ihrer jeweiligen Hüften beabstandet sind, wobei die Erfassungsvorrichtung (C) vor den Fersen der Füße (F', F") platziert und auf der gleichen Höhe wie der Ansatz der Achillessehne an der Ferse der Füße (F', F") gehalten wird.

7. Verfahren nach einem der vorherigen Ansprüche, **dadurch gekennzeichnet, dass** die Punkte (PAF1-PAF3, P1-P7), die Linien (L1-L3) und die Kurven (CM; C1-C7), die während des Schritts B. verwendet werden, unter Verwendung eines Algorithmus für maschinelles Lernen berechnet werden, der basierend auf dem Datensatz trainiert wird, der fotografische Bilder des Fußes (F'; F") umfasst, die in dem Schritt A. erfasst werden.

8. Verfahren nach einem der vorherigen Ansprüche, **dadurch gekennzeichnet, dass** das rekonstruierte Modell des Fußes (F'; F") anhand einer Vielzahl von Frames eines Videos des Fußes (F'; F") rekonstruiert wird, wobei die Erfassung eines Videos für jeden Fuß (F'; F") mittels der Erfassungsvorrichtung (C) gemäß den folgenden Anweisungen ausgeführt wird:
I1. den Benutzer veranlassen, ein Bein (L) auszustrecken, es auf eine Stütze (R) aufzulegen, auf eine Weise, dass das Bein (L) parallel zu dem Boden ist;
I2. den Fuß (F'; F") in Bezug auf das Bein aus der Stütze (R) hervorstehen zu lassen, auf eine Weise, dass der Fuß (F'; F") ab dem Knöchel hängend ist;
I3. den Fuß (F'; F") in der relativen Sagittalebene und Plantarebene senkrecht zu der Längsachse des Beins halten;
I4. die Zehen des Fußes (F'; F") aktiv und maximal strecken;
I5. ein Video des Fußes (F'; F") mittels der Erfassungsvorrichtung (C) erfassen, wobei die Erfassungsvorrichtung (C) um den Fuß gedreht wird, auf eine Weise, dass die Erfassungsvorrichtung (C) immer innerhalb eines vordefinierten Überlappungsbereichs bleibt,
wobei die Anweisung I5 durch Drehen der Erfassungsvorrichtung (C) um den Fuß mit einer Drehung zwischen 200° und 300° und einer konstanten Bewegungsgeschwindigkeit von etwa 7,5 Grad/Sek. ausgeführt wird, wobei die Linse der Erfassungsvorrichtung (C) in einem Abstand von einem Meter von dem Fuß (F'; F") gehalten wird, wobei die Linse in der gleichen Höhe wie der Fuß (F'; F") in Bezug auf den Boden platziert ist, und wobei ein Positionieren von reflektierenden Oberflächen in dem Erfassungsbereich und eine Aussetzung an direkte Lichtquellen vermieden wird.

9. Verfahren nach Anspruch 8, wobei die Vielzahl von Frames anhand eines Videos eines jeweiligen Fußes (F'; F") extrahiert wird, wobei 80 % des Bilds eines Frames in Bezug auf einen Bereich des gefilmten Raums auf einem nachfolgenden Frame überlagert ist,
wobei das rekonstruierte Modell des Fußes (F'; F") in Form einer CAD-Datei vom Typ Mesh anhand der Vielzahl von Frames erlangt wird.

10. Verfahren nach einem der vorherigen Ansprüche, **dadurch gekennzeichnet, dass** klinische Daten des Benutzers in den Schritt B. integriert werden, insbesondere baropodometrische Daten, Kraftverteilung, Position des Massenschwerpunkts, MRI, CT, Ganganalyse.

11. Verfahren nach einem der vorherigen Ansprüche, **dadurch gekennzeichnet, dass** der Schritt A. mittels eines mobilen Erfassungsgeräts, insbesondere eines Smartphones oder Tablets, ausgeführt wird, das konfiguriert ist, um den Datensatz zu erfassen, umfassend fotografische Bilder des Fußes (F'; F") und ein rekonstruiertes Modell des Fußes (F'; F"), und an eine entfernte Server-Steuereinheit sendet, und dass der Schritt B. mittels der entfernten Server-Steuereinheit ausgeführt wird.

12. System, umfassend Einrichtungen, die für die Ausführung der Schritte eines Verfahrens nach einem der vorherigen Ansprüche konfiguriert sind.

13. System nach Anspruch 12, **dadurch gekennzeichnet, dass** es eine mobile Erfassungsvorrichtung und eine Steuereinheit eines entfernten Servers umfasst, wobei die mobile Erfassungsvorrichtung konfiguriert ist, um den Datensatz zu erfassen, der fotografische Bilder des Fußes (F'; F") und ein rekonstruiertes Modell des Fußes (F'; F") umfasst, und an die Steuereinheit des entfernten Servers zu senden, und wobei die Steuereinheit konfiguriert ist, um den Schritt B auszuführen.

14. Computerprogramm, umfassend Anweisungen, sodass sie, wenn das Programm von einem System nach Anspruch 12 oder 13 ausgeführt wird, die Ausführung der Schritte eines Verfahrens nach einem der Ansprüche 1 bis 11 mittels des Systems bewirken.

15. Datenträgersignal, das die Anweisungen eines Programms nach Anspruch 14 trägt.

## Revendications

1. Méthode pour la production d'une semelle orthopédique corrective et/ou sportive personnalisée (1) pour un pied (F', F") d'un utilisateur, comprenant les étapes suivantes :
A. acquérir un ensemble de données comprenant des images photographiques dudit pied (F' ; F") et un modèle reconstruit dudit pied (F' ; F"), ledit modèle reconstruit dudit pied (F' ; F") étant un modèle numérique tridimensionnel dudit pied (F' ; F"), et
B. concevoir et modéliser, au moyen d'une modélisation CAO, ladite semelle orthopédique corrective et/ou sportive (1) en partant dudit modèle reconstruit dudit pied (F' ; F"), dudit ensemble de données comprenant des images photographiques dudit pied (F' ; F") et d'un modèle numérique (100) de la semelle intérieure d'une chaussure de référence, dans lequel ladite modélisation CAO comprend les sous-étapes suivantes :
B1. dimensionner ledit modèle numérique (100) de la semelle intérieure sur la base des dimensions dudit pied (F', F") ;
B2. identifier sur ledit modèle reconstruit dudit pied (F' ; F") des points anatomiques fondamentaux prédéfinis (PAF1-PAF4) dans lesquels
un premier point anatomique fondamental (PAF1) est le milieu du talon,
un deuxième point anatomique fondamental (PAF2) est la base du premier métatarsien,
un troisième point anatomique fondamental (PAF3) est la base du deuxième métatarsien, et
un quatrième point anatomique fondamental (PAF4) est la base du cinquième métatarsien ;
B3. positionner ledit modèle reconstruit dudit pied (F' ; F") dans une position neutre par rapport à la limite externe dudit modèle numérique (100) de la semelle intérieure dimensionnée, avec ledit premier point anatomique fondamental (PAF1), ledit deuxième point anatomique fondamental (PAF2) et ledit quatrième point anatomique fondamental (PAF4) se trouvant sur un même plan ;
B4. après ledit positionnement dudit modèle reconstruit dudit pied (F' ; F") dans une position neutre, la rotation et l'inclinaison dudit modèle reconstruit dudit pied (F' ; F"), en particulier de manière à le positionner dans une position adaptée à un besoin correctif prédéfini ;
B5. après lesdites rotation et inclinaison dudit modèle reconstruit dudit pied (F' ; F"), la définition de trois lignes anatomiques d'intérêt (L1- L3) sur ledit modèle numérique (100) de la semelle intérieure, dans laquelle une première ligne anatomique d'intérêt (L1) est relative à la ligne passant entre la base du premier métatarsien et le milieu du talon dudit modèle reconstruit du pied (F' ; F"), pour identifier la partie médiale du fascia plantaire,
une deuxième ligne anatomique d'intérêt (L2) est relative à la ligne passant entre la base du deuxième métatarsien et le milieu du talon, pour identifier l'axe longitudinal du pied, et
une troisième ligne anatomique d'intérêt (L3) est relative à la ligne passant entre la base du cinquième métatarsien et le milieu du talon, pour identifier la partie latérale du fascia plantaire ;
B6. construire sur ledit modèle numérique (100) de la semelle intérieure une pluralité de courbes de construction (C1-C7), sensiblement perpendiculaires à ladite deuxième ligne anatomique d'intérêt (L2), pour la modélisation tridimensionnelle de la surface supérieure de ladite semelle orthopédique (1) ;
B7. définir sur chacune desdites courbes de construction (C1-C7) au moins trois points (P3-P5) en correspondance avec lesdites lignes anatomiques d'intérêt (L1-L3) ou à une distance prédéterminée dudit axe longitudinal dudit pied (F' ; F") identifié au moyen de ladite deuxième ligne anatomique d'intérêt (L2) ; et
B8. utiliser ledit ensemble de données comprenant des images photographiques dudit pied (F' ; F") pour modifier les positions desdits trois points (P3-P5) le long d'un axe vertical (2), afin de modéliser la géométrie de la surface supérieure de ladite semelle orthopédique (1).

2. Méthode selon la revendication 1, **caractérisée en ce que**, dans ladite sous-étape B5, une courbe d'appui (CM) est également construite sur ledit modèle numérique (100), ladite courbe d'appui (CM) étant approximative avec une courbe de troisième degré passant par trois points relatifs à la base du premier, deuxième et cinquième métatarsien, de manière à indiquer la zone de contact des têtes métatarsiennes et à identifier la zone de contact du pied avec le sol pendant la phase de poussée, lorsque le pied est sur le point de se détacher du sol.

3. Méthode selon l'une quelconque des revendications précédentes, **caractérisée en ce que**, dans ladite sous-étape B6, on construit sept courbes de construction (C1- C7) sur ledit modèle numérique (100) de la semelle intérieure, dans lequel
une première courbe de construction (C1) est espacée de la partie arrière (101) dudit modèle numérique (100) de la semelle intérieure d'une distance égale à 5% de la longueur totale de ladite semelle intérieure, de manière à définir la courbure de la zone du talon dudit pied (F') sur ladite surface supérieure de ladite semelle orthopédique (1) ;
une deuxième courbe de construction (C2) est positionnée au niveau de la projection dudit premier point anatomique fondamental (PAF1) dudit modèle reconstruit dudit pied (F' ; F") sur ledit modèle numérique (100) de la semelle intérieure, de manière à définir la zone du talon dudit pied (F' ; F") sur ladite surface supérieure de ladite semelle orthopédique (1) ;
une troisième courbe de construction (C3) est espacée de la partie arrière (101) dudit modèle numérique (100) de la semelle intérieure d'une distance comprise entre 15 % et 25 % de la longueur totale de ladite semelle intérieure, de manière à modéliser la partie proximale du support de voûte médiane pour ledit pied (F' ; F") sur ladite surface supérieure de ladite semelle orthopédique (1) ;
une quatrième courbe de construction (C4) est positionnée au niveau du point central de la voûte médiane, à peu près à mi-chemin entre le point de contact du talon et le point d'appui du premier métatarsien, dans la zone de l'articulation entre les os naviculaire et cunéiforme, de manière à permettre la modélisation de la partie la plus haute de la voûte médiane pour ledit pied (F' ; F") sur ladite surface supérieure de ladite semelle orthopédique (1);
une cinquième courbe de construction (C5) est positionnée au niveau de la zone distale du premier métatarsien, de manière à pouvoir optimiser la courbure de ladite surface supérieure de ladite semelle orthopédique (1);
une sixième courbe de construction (C6) est positionnée au niveau de la phalange proximale, de manière à ajuster la hauteur de la zone avant de ladite surface supérieure de ladite semelle orthopédique (1 ) ; et
une septième courbe de construction (C7) est positionnée sur la partie avant dudit modèle numérique (100) de la semelle intérieure, pour ajuster la hauteur de la zone où les orteils du pied (F' ; F") reposent sur ladite surface supérieure de ladite semelle intérieure orthopédique (1).

4. Méthode selon l'une quelconque des revendications précédentes, **caractérisée en ce que**, dans ladite sous-étape B7, pour chacune desdites courbes de construction (C1-C7), sept points (P1-P7) sont définis, où
un premier point (P1) et un septième point (P7) desdits sept points (P1-P7) sont les points d'extrémité (P1, P7) et se trouvent sur le bord extérieur dudit modèle numérique (100) de la semelle intérieure ;
un deuxième point (P2) et un sixième point (P6) desdits sept points (P1-P7) sont placés à une distance comprise entre 1 mm et 3 mm dudit bord extérieur dudit modèle numérique (100) de la semelle intérieure ; et
un troisième point (P3), un quatrième point (P4) et un cinquième point (P5) sont lesdits trois points (P3-P5) ;
où, au cours de ladite sous-étape B8, les positions dudit premier point (P1), dudit deuxième point (P2), dudit sixième point (P6) et dudit septième point (P7) sont modifiées le long dudit axe vertical (z) pour modéliser ladite surface supérieure de ladite semelle orthopédique (1).

5. Méthode selon l'une quelconque des revendications précédentes, **caractérisée en ce que**, lors de ladite étape B., la limite externe dudit modèle numérique (100) de la semelle est projetée sur un plan horizontal tangent à la surface inférieure dudit modèle numérique (100), ladite projection de ladite limite externe étant ensuite modifiée pour permettre l'adaptation de la semelle orthopédique (1) réalisée à ladite chaussure de référence.

6. Méthode selon l'une quelconque des revendications précédentes, **caractérisée en ce que** ledit ensemble de données acquis dans ladite étape A. comprend six images photographiques (F1-F6) acquises au moyen d'un dispositif d'acquisition (C) équipé d'un objectif à travers les sous-étapes suivantes :
A1. l'acquisition, au moyen dudit dispositif d'acquisition (C), d'une première image photographique (F1) de la voûte plantaire du pied droit (F'), ladite première image photographique (F1) étant acquise après avoir positionné ledit pied droit (F') sur un bord d'une feuille A4, avec les points d'appui du talon et du métatarse respectifs tangents audit bord, et en maintenant le pied gauche (F") élevé, dans lequel ledit dispositif d'acquisition (C) est placé devant la malléole médiale dudit pied droit (F') et est maintenu à la même hauteur que ladite malléole pendant ladite acquisition ;
A2. l'acquisition, au moyen dudit dispositif d'acquisition (C), d'une deuxième image photographique (F2) de la voûte plantaire du pied gauche (F'), ladite deuxième image photographique (F2) étant acquise après avoir positionné ledit pied gauche (F") sur un bord d'une feuille A4, avec les points d'appui du talon et du métatarse respectifs tangents audit bord, et en maintenant le pied droit (F') élevé, dans lequel ledit dispositif d'acquisition (C) est placé devant la malléole médiale dudit pied gauche (F") et est maintenu à la même hauteur que ladite malléole pendant ladite acquisition ;
A3. l'acquisition, au moyen dudit dispositif d'acquisition (C), d'une troisième image photographique (F3) du pied droit (F') sous charge, dans lequel ledit pied droit (F') pousse sur l'orteil respectif et a le talon soulevé comme dans l'acte de marcher, le pied gauche (F") étant placé devant ledit pied droit (F'), dans lequel ledit dispositif d'acquisition (C) est placé devant la malléole médiale et est maintenu à la même hauteur que ladite malléole pendant ladite acquisition ;
A4. l'acquisition, au moyen dudit dispositif d'acquisition (C), d'une quatrième image photographique (F4) du pied gauche (F") sous charge, dans lequel ledit pied gauche (F") pousse sur l'orteil respectif et a le talon soulevé comme dans l'acte de marcher, le pied droit (F') étant placé devant ledit pied gauche (F"), dans lequel ledit dispositif d'acquisition (C) est placé devant la malléole médiale et est maintenu à la même hauteur que ladite malléole pendant ladite acquisition ;
A5. l'acquisition, au moyen dudit dispositif d'acquisition (C), d'une cinquième image photographique (F5) des pieds (F', F") avec les talons joints, où les deux pieds (F', F") sont positionnés avec les talons joints et les orteils séparés pour former un angle de 90° par rapport à la jointure desdits talons, ledit dispositif d'acquisition (C) étant placé devant lesdits pieds (F', F") de manière à encadrer les deux zones médianes des pieds respectifs et maintenu à la même hauteur que les malléoles pendant ladite acquisition ; et
A6. l'acquisition, au moyen dudit dispositif d'acquisition (C), d'une sixième image photographique (F6) des talons des deux pieds (F', F"), dans lequel lesdits pieds (F', F") sont placés à l'écart, en ligne avec l'articulation de leurs hanches respectives, ledit dispositif d'acquisition (C) étant placé devant les talons desdits pieds (F', F") et maintenu à la même hauteur que l'insertion du tendon d'Achille sur le talon desdits pieds (F', F").

7. Méthode selon l'une quelconque des revendications précédentes, **caractérisée en ce que** les points (PAF1-PAF3, P1-P7), les lignes (L1-L3) et les courbes (CM ; C1-C7) utilisés lors de ladite étape B. sont calculés en utilisant un algorithme d'apprentissage automatique entraîné sur la base dudit ensemble de données comprenant des images photographiques dudit pied (F' ; F") acquises lors de ladite étape A.

8. Méthode selon l'une quelconque des revendications précédentes, **caractérisée en ce que** ledit modèle reconstruit dudit pied (F' ; F") est reconstruit à partir d'une pluralité de trames d'une vidéo dudit pied (F' ; F"), l'acquisition d'une vidéo pour chaque pied (F' ; F") étant réalisée au moyen dudit dispositif d'acquisition (C) en suivant les instructions suivantes :
I1. I1. laisser ledit utilisateur tendre une jambe (L), en la faisant reposer sur un support (R), de telle sorte que ladite jambe (L) soit parallèle au sol ;
I2. faire en sorte que le pied (F' ; F") relatif à ladite jambe fasse saillie dudit support (R), de telle sorte que ledit pied (F' ; F") soit suspendu à partir de la cheville ;
I3. maintenir ledit pied (F' ; F") avec le plan sagittal et le plan plantaire relatifs perpendiculaires à l'axe longitudinal de la jambe ;
I4. étendre de manière active et maximale les orteils dudit pied (F' ; F") ;
I5. acquérir une vidéo dudit pied (F' ; F") au moyen dudit dispositif d'acquisition (C), en faisant tourner ledit dispositif d'acquisition (C) autour dudit pied de telle manière que ledit dispositif d'acquisition (C) reste toujours dans une zone de recouvrement prédéfinie,
dans lequel ladite instruction I5 est exécutée en faisant tourner ledit dispositif d'acquisition (C) autour dudit pied avec une rotation comprise entre 200° et 300° et une vitesse de mouvement constante d'environ 7,5 degrés, en maintenant ledit objectif dudit dispositif d'acquisition (C) à une distance d'un mètre dudit pied (F' ; F"), ledit objectif étant placé à la même hauteur que ledit pied (F' ; F") par rapport au sol, et en évitant de positionner des surfaces réfléchissantes dans ladite zone d'acquisition et de s'exposer à des sources de lumière directe.

9. Méthode selon la revendication 8, où ladite pluralité de trames est extraite, à partir d'une vidéo d'un pied respectif (F' ; F"), dans lequel 80 % de l'image d'une trame relative à une région de l'espace filmé est superposée sur une trame suivante, ledit modèle reconstruit dudit pied (F' ; F") étant obtenu sous la forme d'un fichier CAO du type maillé à partir de ladite pluralité de trames.

10. Méthode selon l'une quelconque des revendications précédentes, **caractérisée en ce que** des données cliniques dudit utilisateur sont intégrées dans ladite étape B., notamment des données baropodométriques, de répartition des forces, de position du centre de masse, d'IRM, de CT, d'analyse de la marche.

11. Méthode selon l'une quelconque des revendications précédentes, **caractérisée en ce que** ladite étape A. est réalisée au moyen d'un dispositif d'acquisition mobile, notamment un smartphone ou une tablette, configuré pour acquérir ledit ensemble de données comprenant des images photographiques dudit pied (F' ; F") et un modèle reconstruit dudit pied (F' ; F") et l'envoyer à une unité de commande de serveur distant, et **en ce que** ladite étape B. est réalisée au moyen de ladite unité de commande de serveur distant.

12. Système comprenant des moyens configurés pour l'exécution des étapes d'une méthode selon l'une quelconque des revendications précédentes.

13. Système selon la revendication 12, **caractérisé en ce qu'**il comprend un dispositif d'acquisition mobile et une unité de commande de serveur distant, dans lequel ledit dispositif d'acquisition mobile est configuré pour acquérir ledit ensemble de données comprenant des images photographiques dudit pied (F' ; F") et un modèle reconstruit dudit pied (F' ; F") et l'envoyer à ladite unité de commande dudit serveur distant, et dans lequel ladite unité de commande est configurée pour exécuter ladite étape B.

14. Programme d'ordinateur comprenant des instructions telles que, lorsque ledit programme est exécuté par un système selon les revendications 12 ou 13, elles provoquent l'exécution des étapes d'une méthode selon l'une quelconque des revendications 1 à 11 au moyen dudit système.

15. Signal de transport de données, qui transfère les instructions d'un programme selon la revendication 14.
